# EUROPÄISCHE PATENTSCHRIFT

(11) **EP 0 739 700 B1**
(45) Veröffentlichungstag und Bekanntmachung des Hinweises auf die Patenterteilung: **29.10.1997**
(21) Anmeldenummer: 96104471.6
(22) Anmeldetag: 21.03.1996
(51) Int. Cl.: B29B 9/06, B29C 47/30

(54) **Unterwasser-Granulierlochplatte mit Verschleissschutzschicht**
Underwater pelletiser die plate with wear resistant layer
Matrice de granulation dans l'eau avec couche de protection contre l'usure

(30) Priorität: 27.04.1995 DE 19515473
(43) Veröffentlichungstag der Anmeldung: 30.10.1996
(73) Patentinhaber: Werner & Pfleiderer GmbH, 70469 Stuttgart (DE)
(72) Erfinder: Munz, Rainer, Dipl.-Ing., 73614 Schorndorf (DE); Sauter, Rainer, Dipl.-Ing., D-71686 Remseck (DE)
(74) Vertreter: Rau, Manfred, Dr. Dipl.-Ing.

(56) Entgegenhaltungen:
- EP-A- 0 152 844
- EP-A- 0 246 921
- US-A- 4 564 350

## Beschreibung

Die Erfindung richtet sich auf eine Unterwasser-Granulierlochplatte für einen Extruder zum Granulieren von thermoplastischen Kunststoffen, wobei die von Granuliermessern überstrichene, mit einer Verschleißschutzschicht versehene Stirnfläche der Düsenplatte unter Wasser angeordnet ist, und wobei eine Wärmeisolierung an der Granulierlochplatte vorgesehen ist.

Zur Erzeugung von einwandfreiem Granulat muß der zu granulierende thermoplastische Kunststoff bis zu seinem Austritt aus den Löchern bzw. Düsen der Granulierlochplatte oberhalb seiner Erstarrungstemperatur gehalten werden. Hierbei ergeben sich jedoch Probleme dadurch, daß der schmelzflüssige Kunststoff unmittelbar nach seinem Austritt aus den Löchern der Granulierlochplatte gekühlt werden muß, wofür das bereits angesprochene Kühlbad verwendet wird. Dementsprechend entsteht ein erhebliches Temperaturgefälle zwischen der Außenseite und der Innenseite der Granulierlochplatte.

Zur Aufrechterhaltung des Temperaturgefälles sind Granuliervorrichtungen bekannt, bei denen die durch das Kühlmittel von der Düsenplatte abgeführte Wärme laufend ersetzt wird. Dabei werden durch intensives Beheizen der Düsenplatte sehr große Wärmemengen zugeführt, wobei allerdings auch bei hohen Heizleistungen häufig nicht der gewünschte Temperaturverlauf erreicht wird.

Im Zusammenhang mit dieser Problematik ist es aus der CH 461 771 A1 bekannt, jede Düsenbohrung wenigstens auf einem Teil ihrer Länge mit einem Material auszufüttern, das eine geringere Wärmeleitfähigkeit als die Düsenplatte aufweist, wobei durch eine derartige Wärmeisolierschicht das Abfließen der Wärme in die gekühlte Düsenplatte verhindert werden soll. Als derartiges Material wurde Porzellan oder ein hochlegierter Edelstahl in Betracht gezogen.

In der US 3 599 286 wird eine Granulierlochplatte beschrieben, bei der die Düsen von einem thermisch isolierenden Laminat umgeben sind, welches sich bis an die Schneidoberfläche erstreckt. Hierdurch werden die Düsen in radialer Richtung isoliert.

Neben der Problematik des Temperaturverlaufes in axialer Richtung, also in Extrusionsrichtung bzw. in Richtung senkrecht zur Oberfläche der Granulierlochplatte, ist allerdings auch die Temperaturverteilung in der Ebene der Granulierlochplatte bzw. in radialer Richtung von Bedeutung.

Da es wünschenswert ist, daß ein möglichst einheitliches Granulat erzeugt wird, müssen bei allen Löchern der Granulierlochplatte gleiche Bedingungen, also insbesondere auch gleiche Temperaturen vorliegen.

Diese Forderung nach einer weitgehend symmetrischen und etwa in Höhe der Schmelztemperatur liegenden Stahltemperatur bis zur Schneidkante ist bei Wasserring-Granulierlochplatten realisierbar, da dort das Granulattransportwasser keinen Kontakt zur Messerlauffläche aufweist. Dementsprechend werden gleichmäßig große Granulatkörner geschnitten. Erfahrungsgemäß können jedoch mit solchen Systemen bei niederviskosen Schmelzen aufgrund des Zusammenklebens von Granulaten keine Einzelkörner erzeugt werden, was wiederum bei den hier gattungsgemäß in Betracht stehenden Unterwassergranuliersystemen möglich ist. Bei diesen Unterwasser-Granulierlochplatten stellt sich aber das Problem, daß in radialer Richtung und Umfangsrichtung keine absolut gleichmäßige Temperaturverteilung erzielbar ist, und zwar praktisch bei allen bekannten Konstruktionsvarianten, wie Isolierspaltlochplatten, Heat-Exchanger-Lochplatten und Heat-Channel-Lochplatten.

Ein weiteres Problem liegt darin, daß der zum Schneiden auf der Lochplattenoberfläche erforderliche Verschleißschutz in der Regel aus einem spröden und damit thermisch empfindlichen Werkstoff besteht, was bei Unterwasser-Granulierlochplatten häufig zu einer Rißbildung führt, wodurch die radiale Temperaturverteilung gestört wird und überdies Schneidschwierigkeiten bei niederviskosen Schmelzen auftreten können.

Hiervon ausgehend liegt der Erfindung die Aufgabe zugrunde, eine Unterwasser-Granulierlochplatte so auszugestalten, daß in axialer Richtung eine Temperatur des extrudierten Materials oberhalb der Schmelztemperatur bis zum Austritt aus der Granulierlochplatte zuverlässig aufrechterhalten wird, und daß in radialer Richtung und in Umfangsrichtung über die gesamte Granulierlochplatte ein gleichmäßiges Temperaturniveau gewährleistet ist.

Diese Aufgabe wird erfindungsgemäß dadurch gelöst, daß zwischen der äußeren Oberseite der eigentlichen Granulierlochplatte und der Verschleißschutzschicht eine Isolierschicht angeordnet ist, auf der die Verschleißschutzschicht mit radialem Spiel gelagert ist.

Durch diese erfindungsgemäße Ausgestaltung ergibt sich eine Mehrzahl von Vorteilen, indem praktisch die Eigenschaften einer Wasserring-Granulierlochplatte hinsichtlich der Beheizungssymmetrie, des Tempraturniveaus, des Schmelzdruckaufbaus und der Granulatgleichmäßigkeit mit den Vorteilen einer Unterwasser-Granulierlochplatte hinsichtlich deren großen Durchsätze von bis zu 50 Tonnen pro Stunde und deren agglomeratfreiem Schnitt von niederviskosen Polymerschmelzen erzielt werden.

Es wird aufgrund der erfindungsgemäßen Ausgestaltung bis zur Verschleißschutzschicht ein hohes Temperaturniveau gehalten bei einem vollständig symmetrischen Temperaturprofil im gesamten Schmelzflußbereich. Durch die thermische Trennung der Verschleißschutzschicht kann dort ein niedriges Temperaturniveau aufrechterhalten werden, was zu geringen Wärmespannungen und damit zu einer Vermeidung von Rißbildungen in der Verschleißschutzschicht führt. Wegen der vergleichsweise kalten Messerlauffläche wird bei niederviskosen Polymerschmelzen ein zuverlässiger Schnitt ohne Schmelzfilmbildung erreicht. Gleichzeitig erfüllt die Isolationsschicht die Funktion, einen thermischen Spannungsausgleich zwischen der eigentlichen Granulierlochplatte und der Verschleißschutzschicht zu ermöglichen. Ein weiterer wesentlicher Vorteil ist die leichte Austauschbarkeit der Verschleischutzschicht nach entsprechender Abnutzung im Betrieb.

Die Isolierschicht weist vorzugsweise eine Dicke von bis zu einigen Millimetern auf und entspricht damit etwa der Führungslänge der Schmelzeaustrittsbohrung bei Wasserringgranulierlochplatten.

Die Isolierschicht kann durch Löten, Schweißen, Kleben bzw. mit den für Keramik-Werkstoffen üblichen Verfahren, wie Aufdampfen, Plasmaspritzen usw., oder Schrauben befestigt werden, wobei die letztgenannte Befestigungstechnik einen Dehnungsausgleich in der Schichtebene ermöglicht.

Als Isolierwerkstoff kommen bekannte Werkstoffe, wie z.B. Zirkonoxid in Betracht, deren Wärmeleitfähigkeit sehr gering sein muß, um auch in Schichtdicken mit weniger als 1 mm noch ausreichend zu isolieren.

Wegen der relativ geringen mechanischen Stabilität derartiger Isolierschichten empfiehlt es sich nicht, diese direkt mit der Verschleißschutzschicht zu verbinden.

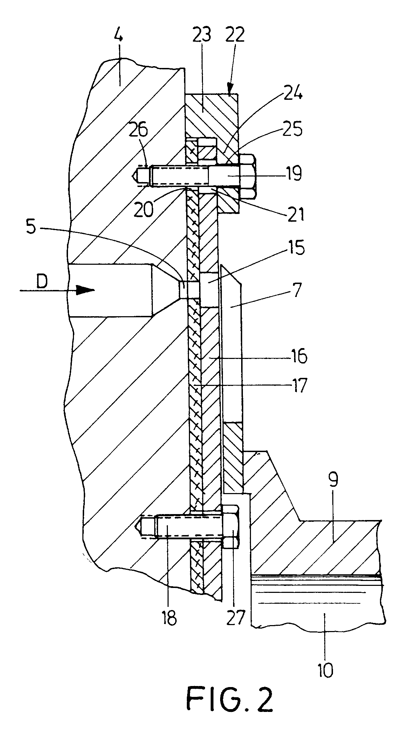

Dementsprechend ist insbesondere bei derartigen Isolierschichten vorgesehen, daß die Verschleißschutzschicht nach Art einer schwimmend gelagerten, vorgespannten Membran auf der Isolierschicht gehalten wird, d.h. diese Schicht wird mit radialem Spiel gelagert, ohne daß in axialer Richtung ein wesentlicher Druck auf sie ausgeübt wird, wie aus Fig. 2 ersichtlich.

Nachfolgend wird die Erfindung anhand eines bevorzugten Ausführungsbeispiels in Verbindung mit der Zeichnung näher erläutert. Dabei zeigen
- Fig. 1: einen Schnitt durch eine Unterwasser-Granulierlochplatte der gattungsgemäßen Art,
- Fig. 2: eine vergrößerte Schnittdarstellung zur Veranschaulichung der erfindungsgemäßen Ausgestaltung,
- Fig. 3 und 4: weitere Varianten der Verschleißschutzschicht in ringförmiger Ausgetaltung und
- Fig. 5: Ausbildungen der Produktdurchtrittsbohrungen.

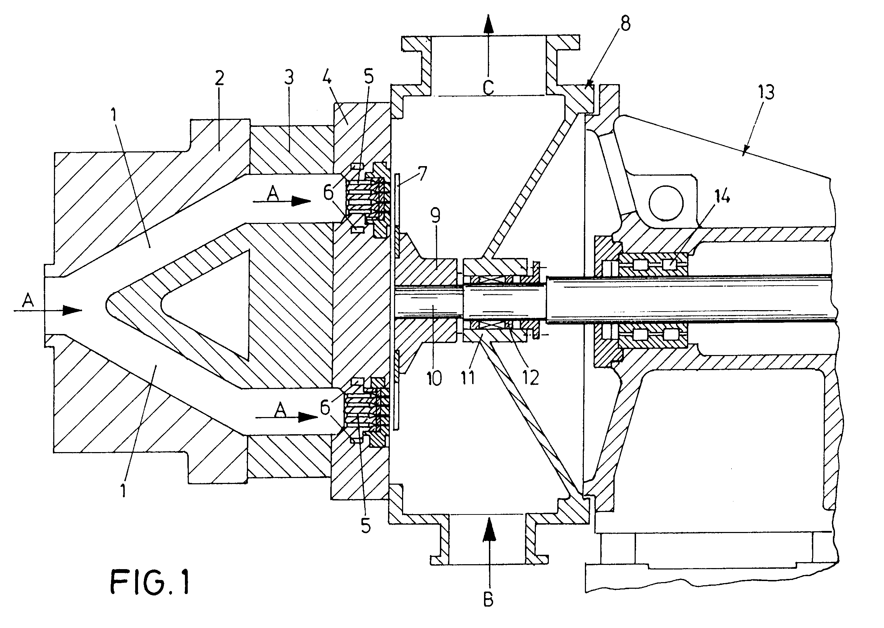

Aus einem in Fig. 1 nicht dargestellten Extruder oder einer anderen Fördereinrichtung ausgepreßte Kunststoffschmelze strömt durch die Kanäle 1 in ein Verteilerstück 2 und durch eine Zwischenplatte 3 auf eine Granulierlochplatte 4 zu. Die Pfeile A zeigen die Strömungsrichtung an. Die Granulierlochplatte 4 weist eine Reihe von Düsenbohrungen 5 auf, durch die die Schmelze gepreßt wird. Kanäle 6 ermöglichen den Durchfluß eines Heizmediums.

Nach dem Austritt aus den Düsenbohrungen 5 werden die einzelnen Kunststoffstränge von rotierenden Messern 7 erfaßt und in Granulatkörper zerschnitten. Damit die austretenden Stränge die notwendige Festigkeit erhalten, und um zu vermeiden, daß die abgeschnittenen Granulate zusammenkleben, erfolgt der Granuliervorgang in einer Kühlflüssigkeit, in der Regel Wasser. Dabei durchströmt ein Kühlmittelstrom eine Granulierhaube 8, die einen mit den Messern 7 bestückten Schneidkopf 9 umschließt. Durch den Pfeil B wird der Eintritt des Kühlmittels in die Granulierhaube 8 und durch den Pfeil C der Austritt des Kühlmittels samt des mitgeführten Granulats aus der Haube veranschaulicht.

Der Schneidkopf 9 ist auf einer Welle 10 befestigt, deren Durchgang durch eine Verstärkung 11 der Granulierhaubenwandung mit Dichtungen 12 versehen ist. Ein nur teilweise gezeigtes Gehäuse 13 enthält Lagerungen 14 für die Welle 10 des Schneidkopfes 9 und schließt an einen in der Zeichnung nicht dargestellten Antrieb für den Schneidkopf 9 an.

Die in Fig. 2 ausschnittsweise dargestellte Granulierlochplatte 4 weist eine Anzahl von (auf z.B. konzentrischen Kreisen angeordneten) Düsenbohrungen 5 auf, von denen in der Zeichnung der Einfachheit halber nur eine dargestellt ist.

Auf der einen Seite dieser Düsenbohrungen 5 tritt der flüssige Kunststoff in Richtung des Pfeils D ein, wobei ein Kanal durch den Grundkörper der Granulierlochplatte 4 verläuft. Dieser mündet in der, wegen der unterschiedlichen Wärmedehnung von Grundkörper und Verschleißschutzschicht und deren radialer Verschiebbarkeit, größeren Bohrung 15 der Verschleißschutzschicht 16.

Gemäß der Erfindung ist zwischen der Granulierlochplatte 4 und der Verschleißschutzschicht 16 eine Isolierschicht 17 vorgesehen, wobei die Verschleißschutzschicht 16 mittels Schrauben 18, 19 so festgelegt ist, daß sie ein gewisses radiales Spiel aufweist, so daß ein vollständiger Dehnungsausgleich zwischen Verschleißschutzschicht 16, Isolierschicht 17 und Granulierlochplatte 4 realisierbar ist.

Dies wird im Ausführungsbeispiel so bewerkstelligt, daß die Schraube 19 eine Bohrung 21 der Verschleißschutzschicht 16 mit leichtem Spiel 2o durchsetzt, wobei der axiale Druck durch ein Halte- und Distarzelement 22 abgefangen wird, das einen sich in Strömungsrichtung erstreckenden Grundkörper 23 und einen L-förmigen Ansatz 24 aufweist mit einer Bohrung 25, die von der Schrauhe 19 ebenfalls durchsetzt wird, so daß der Anziehdruck der Schraube 19, die in eine Gewindebohrung 26 eingreift, abgefangen wird.

Die Schraube 18 übergreift mit ihrem Kopf 27 die Verschleißschutzschicht 16 und die Isolierschicht 17 und sorgt für eine Festlegung in axialer Richtung.

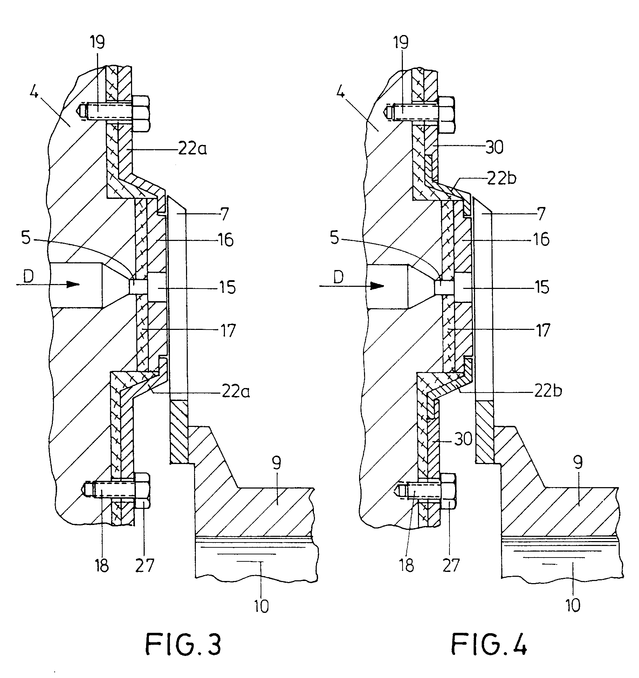

Bei der in Fig. 3 dargestellten Variante sind die Halte- und Distanzelemente 22a etwa Z-förmig ausgebildet, wobei der eine Schenkel von einer Halteschraube 18 bzw. 19 durchsetzt wird und der andere, freie Schenkel die Verschleißschutzschicht 16 übergreift.

In Fig. 4 ist eine weitere Variante dargestellt, wobei dort der innere Schenkel des Halte- und Distanzelements 22b nicht von der Schraube 18 bzw. 19 direkt durchsetzt wird, sondern mittelbar durch einen Abschnitt eines Abdeck- und Halteblechs 30.

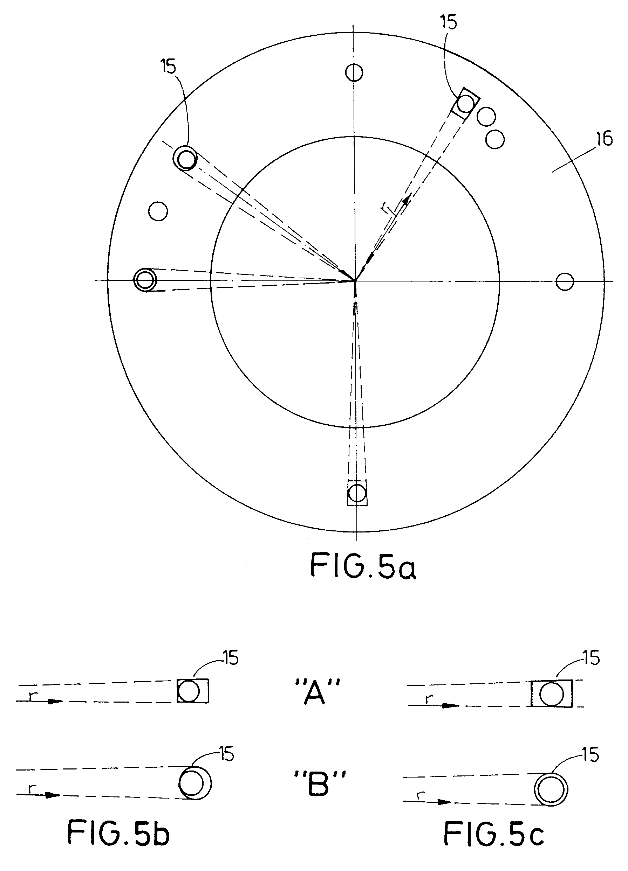

In Fig. 5 sind die Verhältnisse an den Produktdurchtrittsbohrungen 15 veranschaulicht, die sich aufgrund der erfindungsgemäßen "schwimmenden" Lagerung der Verschleißschutzschicht 16 beim Anfahren des Granuliervorgangs ergeben.

Dabei zeigt Fig. 5a eine Aufsicht auf die Verschleißschutzschicht 16 mit den Bohrungen 15.

In Fig. 5b ist die Situation vor dem Start der Messer 7 und der Wasserkühlung dargestellt, wobei aber bereits eine Beheizung stattfindet. Dabei sind gemäß dem Detail A bzw. B unterschiedliche Formen der Bohrungen 15 in Betracht gezogen, nämlich gemäß dem Detail B herstellungstechnisch einfach realisierbare runde Bohrungen und gemäß dem Detail A trapezförmige Bohrungen, wobei die Seitenkanten des Trapezes dann als Schneidkanten beim Abscheren der Kunststoffstränge mit dem Messer 7 dienen.

Wird nun ausgehend von der in Fig. 5b dargestellten Situation der Wasserstrom gestartet, wird die Verschleißschutzschicht 16 abgekühlt und es kommt zu einer radialen Verschiebung in Richtung auf den Kreismittelpunkt in Fig. 5a zu relativ zu dem Grundkörper 4 und zu der Isolierschicht 17, so daß die in Fig. 5c dargestellten Relativpositionen entstehen.

## Patentansprüche

1. Unterwasser-Granulierlochplatte für einen Extruder zum Granulieren von thermoplastischen Kunststoffen, wobei die von Granuliermessern überstrichene, mit einer Verschleißschutzschicht (16) versehene Stirnfläche der Düsenplatte unter Wasser angeordnet ist, und wobei eine Wärmeisolierung an der Granulierlochplatte vorgesehen ist, dadurch gekennzeichnet, daß zwischen der äußeren Oberseite der eigentlichen Granulierlochplatte (4) und der Verschleißschutzschicht (16) eine Isolierschicht (17) angeordnet ist, wobei die Verschleißschutzschicht (16) gegenüber der Isolierschicht (17) mit radialem Spiel und ohne bzw. nur geringem axialem Druck gelagert ist.

2. Granulierlochplatte nach Anspruch 1, dadurch gekennzeichnet, daß die Isolierschicht (17) aus Zirkonoxid besteht.

## Claims

1. An underwater pelletizing die plate for an extruder for the pelletizing of thermoplastics, the front face of the die plate, which is provided with a wearing protection layer (16) and over which pass the pelletizing knives, being disposed under water, and heat insulation means being provided on the pelletizing die plate, characterized in that an insulating layer (17) is disposed between the external upper side of the actual pelletizing die plate (4) and the wearing protection layer (16), the wearing protection layer (16) being positioned, relative to the insulating layer (17), with radial play and without axial pressure or with little axial pressure, respectively.

2. A pelletizing die plate according to claim 1, characterized in that the insulating layer (17) consists of zirconium oxide or the like.

## Revendications

1. Plaque perforée de granulation dans l'eau pour une extrudeuse servent à réaliser la granulation de matières thermoplastiques, dans laquelle la surface frontale de la plaque de filière, qui est balayée par des couteaux de granulation et pourvue d'une couche de protection contre l'usure (16), est disposée sous l'eau, et une isolation thermique est prévue sur la plaque perforée de granulation, caractérisée en ce qu'entre une couche isolante (17) est disposée entre la face supérieure de la plaque perforée de granulation proprement dite (4) et la couche du protection contre l'usure (16), la couche de protection contre l'usure (16) étant supportée en vis-à-vis de la couche isolante (17) avec un jeu radial et sans pression axiale ou avec seulement une faible pression axiale.

2. Plaque perforée de granulation selon la revendication 1, caractérisée en ce que la couche isolante (17) est formée d'oxyde de zirconium ou analogue.
